# EUROPEAN PATENT APPLICATION

(11) **EP 4 790 359 A1**
(43) Date of publication of application: **12.08.2026**
(21) Application number: 25219086.3
(22) Date of filing: 27.11.2025
(51) Int. Cl.: G01B 11/24, G01B 11/02, G01B 11/06

(54) **MEASURING FEATURES ON A PART UTILISING DEPTH DATA**

(30) Priority: 07.02.2025 US 202519048728
(71) Applicant: The Boeing Company, Arlington, VA 22202 (US)
(72) Inventor: Smith, Brian James, Arlington, 22202 (US); Kelsey, William D., Arlington, 22202 (US); Kasper, Kristine Marie, Arlington, 22202 (US); Weathersby, Ethan, Arlington, 22202 (US); Valbuena, Miguel Angel, Arlington, 22202 (US); Reid, Eric Matthew, Arlington, 22202 (US); Lee, Michael, Arlington, 22202 (US); Middleton, Mitchel S., Arlington, 22202 (US)
(74) Representative: Witte, Weller & Partner Patentanwälte mbB

(57) **Abstract**

One example provides a method (700) for measuring a part (102). The method (700) comprises obtaining depth data of one or more features on the part as scanned by a plurality of depth imaging devices (704), and establishing an origin of a three-dimensional coordinate system in the depth data (708). The method (700) further comprises determining a measured distance for at least one feature of the one or more features from the depth data, and based at least upon the inspection plan and the origin of the three-dimensional coordinate system (712). The method (700) additionally comprises outputting a result including the measured distance for the at least one feature (726).

## Description

### BACKGROUND

Part inspection helps to ensure the quality, reliability, and safety of parts. In many instances, trained individuals visually examine and assess the quality, integrity, and compliance of various parts with specific parameters, and identify any defects, deviations, or abnormalities they observe or to which they have been alerted during inspection. An inspection process can involve identification of measurement points on the part, for example by referencing engineering drawings to determine features to measure on the part. The measurement itself can be performed using a variety of tools, such as a tape measure, calipers, and thickness gauges. The inspection process can also include human visual inspection of cutter lines, smearing and chip welding, mismatches, gouges, elongated holes, missing or mis-located components, and identification of other defects.

### SUMMARY

One example provides a method for measuring a part. The method comprises obtaining depth data of one or more features on the part as scanned by a plurality of depth imaging devices, and establishing an origin of a three-dimensional coordinate system in the depth data. The method further comprises determining a measured distance for at least one feature of the one or more features from the depth data, and based at least upon the inspection plan and the origin of the three-dimensional coordinate system.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 schematically depicts an example measurement system for scanning a part.
FIG. 2 illustrates a block diagram of an example measurement system for determining measurements of features on a part utilizing depth data of the part.
FIG. 3 illustrates a flowchart of an example method for utilizing depth data to determine measured distances for features on a part.
FIG. 4 schematically depicts an example part with features to be measured.
FIG. 5 schematically depicts example measurements for a feature of the part of FIG. 4.
FIGS. 6A and 6B schematically depict an example height measurement for the feature of FIG. 5.
FIG. 7 illustrates a flowchart of an example method for determining measured distances of a feature on a part.
FIG. 8 shows a block diagram of an example computing system.

### DETAILED DESCRIPTION

As introduced above, in many instances, part inspection involves human visual inspection and manual measurement of parts. For example, measurements of a part can be performed using tools such as a tape measure and calipers to determine dimensions across multiple sections of the part. This process requires the person performing the measurement to be familiar with the inspection plan and engineering drawings, and to maintain precision across different parts which can vary in length from less than one foot to over 100 feet. This is labor intensive, repetitive, and can require an extensive amount of time to perform in general, let alone to do so accurately. For example, a human quality insurance (QA) inspector using calipers may measure a stringer for an aircraft at a rate around half a foot per minute, which would entail the inspector spending about 200 minutes to successfully complete.

In some instances, laser measurement devices can be used to determine one or more dimensions of a part. However, these measurement devices require a physical calibration of the sensor's mechanical mounting structure, precise part mounting, and controlled temperature conditions to obtain reliable measurements. It can also be challenging to obtain measurements of multiple dimensions and to maneuver a part in multiple degrees of freedom during the measurement process.

Accordingly, examples are disclosed that relate to utilizing depth data from a plurality of depth imaging devices for determining a measured distance of a feature on a part. Briefly, a method obtains depth data of one or more features on the part as scanned by a plurality of depth imaging devices. Further, the method establishes an origin of a three-dimensional coordinate system in the depth data. For example, the origin can be established at a predetermined point on a selected part. Additionally, the method determines the measured distance for at least one feature of the one or more features from the depth data, and based at least upon the inspection plan and the origin of the three-dimensional coordinate system. A result is generated with the measured distance for the at least one feature. Additionally suitable information, for example, measured distances for other features, can also be included in the result.

Such a method can be used to measure any suitable part. Examples include aircraft stringers, aircraft wing spars, channel vents, C-channels, tubes, ducts, metal parts (e.g., aluminum, titanium, or steel parts), and composite parts (e.g., carbon fiber parts). A measurement system configured to execute the disclosed example methods may perform automated dimension inspections of aircraft stringers at rates over 10 feet per minute and thus, significantly faster than a human QA inspector. In other examples, any other suitable part can be measured according to the present disclosure.

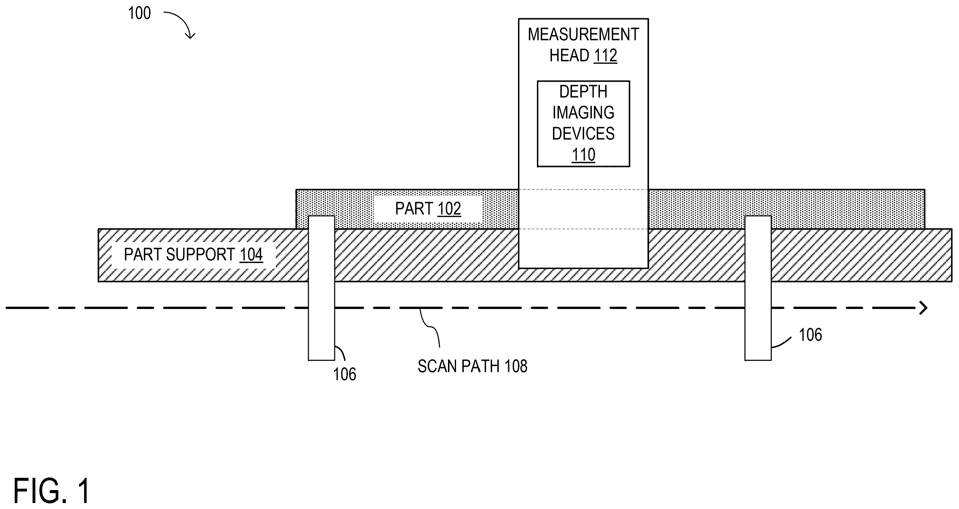

FIG. 1 shows an example of a measurement system 100 for scanning a part 102. As discussed in more detail below, such scans can be used as depth data to determine measurements for the part 102, for example, as part of an inspection flow. In the current example, the measurement system 100 comprises a part support 104 with mounts 106 configured to hold the part 102 along a scan path 108. Such a configuration helps to place the part 102 at an expected position for imaging. Knowing the approximate physical location means that surfaces on the part 102 can be isolated to establish the part's coordinate system in the imaged data. Further, positions of features to be measured on the part 102 are defined by an inspection plan. In other examples, a part can be arranged on a part support in another manner.

The measurement system 100 comprises a plurality of depth imaging devices 110 arranged on a measurement head 112. Such a configuration helps the depth imaging devices 110 to have expected positions relative to one another. For example, the plurality of depth imaging devices 110 is arranged such that the part 102 on the part support 104 is imaged from a sufficient number of different angles to acquire a desired measurement. Further, one or more of the measurement head 112 and/or the part support 104 is selectively controllable to move with respect to the part 102 along the scan path 108. In such a configuration, the plurality of depth imaging devices 110 can obtain depth images along a length of the part 102. The depth images are used to form three-dimensional depth data of the part 102. In various examples, any suitable type and number of depth imaging devices can be used. Examples of depth imaging devices include a light detection and ranging (LIDAR) sensor, a time-of-flight (ToF) depth camera, a structured light depth camera, a stereo camera arrangement, or another suitable depth sensor. In some examples, one or more of the depth imaging devices 110 can comprise suitable optical filters, such as polarizing filers or wavelength bandpass filters, for example. While discussed herein with reference to the aerospace industry, the measurement system 100 can also be used in other applications including automotive, rail, maritime, space, military, energy, construction, and engineering applications, or any other applications where inspection of tolerances is required during manufacture, service, and/or inspection. FIG. 1 is illustrative. In other examples, the measurement system 100 can have another configuration.

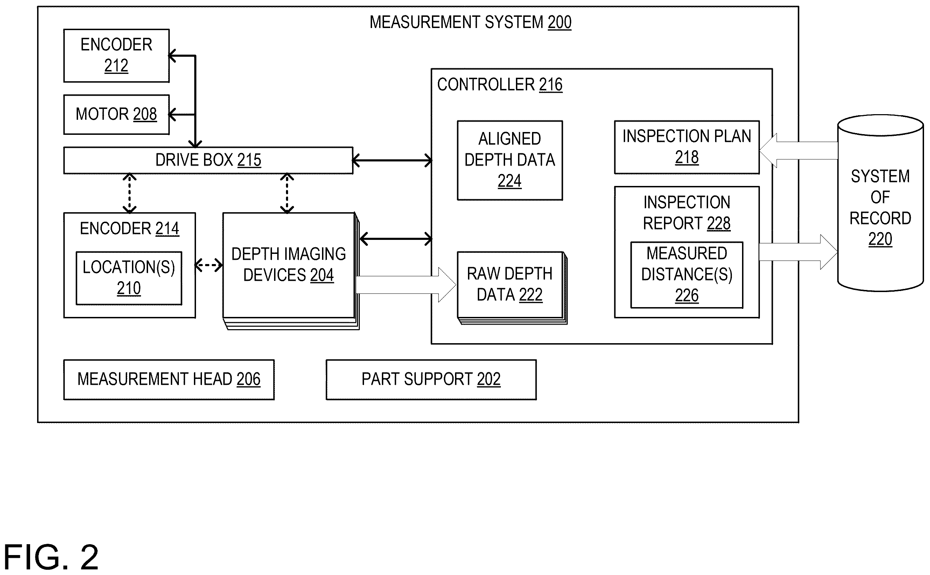

FIG. 2 illustrates a block diagram of an example measurement system 200 for a part. The measurement system 100 is an example of the measurement system 200. Thus, similar to the measurement system 100, the measurement system 200 comprises a part support 202 and a plurality of depth imaging devices 204 arranged on a measurement head 206.

In the current example, the measurement system 200 comprises a motor 208 selectively controllable to change a location 210 of the measurement head 206, for example, along the part support 202 and thus along a scan path. The motor 208 is operatively coupled to a first encoder 212 to help control movement of the measurement head 206. In some examples, the first encoder 212 might not have sufficient precision to provide the location 210 of the measurement head 206 within a desired tolerance. Therefore, the measurement system 200 also can include a second encoder 214 having a comparatively higher precision than the first encoder 212. Here, the second encoder 214 is configured to provide the location 210 of the measurement head 206 along the scan path. In some examples, the location 210 is provided in real time with operation of the plurality of depth imaging devices 204. Such a configuration can help a plurality of the locations 210 to be integrated with data from the depth imaging devices 204. In various examples, the second encoder 214 can include a magnetic encoder, an optical encoder, a laser inferometer, and/or another suitable encoder with sufficient precision and speed. Further, in other examples, a conveyor other than a motor can be used to move the measurement head 206. Examples include magnetic levitation drive systems and pneumatic systems. A drive box 215 is operatively coupled to the motor 208, the first and second encoders 212, 214 and the plurality of depth imaging devices 204 to facilitate communication.

The measurement system 200 further comprises a controller 216 for controlling various aspects of the measurement system 200. For example, the controller 216 is configured to control the measurement head 206 and the plurality of depth imaging devices 204 based at least upon an inspection plan 218, for example, from a system of record 220 or another suitable source. The inspection plan 218 includes relevant information for measuring one or more features on the part. As a specific example, each feature, or certain features, to be measured can each be associated in the inspection plan 218 with a feature identifier, a desired location to image the feature for measurement, acceptable tolerances for the measurement. Further, the inspection plan 218 can be retrieved based upon a part number of the part. In some examples, different part numbers can have different inspection plans.

Additionally, the controller 216 is configured to obtain raw depth data 222 of the part from the plurality of depth imaging devices 204. The raw depth data 222 can include point clouds obtained in a scan, or other suitable format of depth data (e.g., a surface reconstruction formed by identifying surfaces from point cloud data). Here, the controller 216 is configured to align the raw depth data 222 from the individual depth imaging devices 204 to form aligned depth data 224. In examples using point clouds, the individual point clouds can be transformed through the use at least of transformation matrices of the plurality of depth imaging devices 204, and/or using another suitable transformation. The controller 216 can also obtain the locations 210 of the measurement head 206 from the second encoder 214, for example, to integrate with the raw depth data 222. In such a configuration, the controller 216 can utilize the locations 210 to align the raw depth data 222 within a desired tolerance.

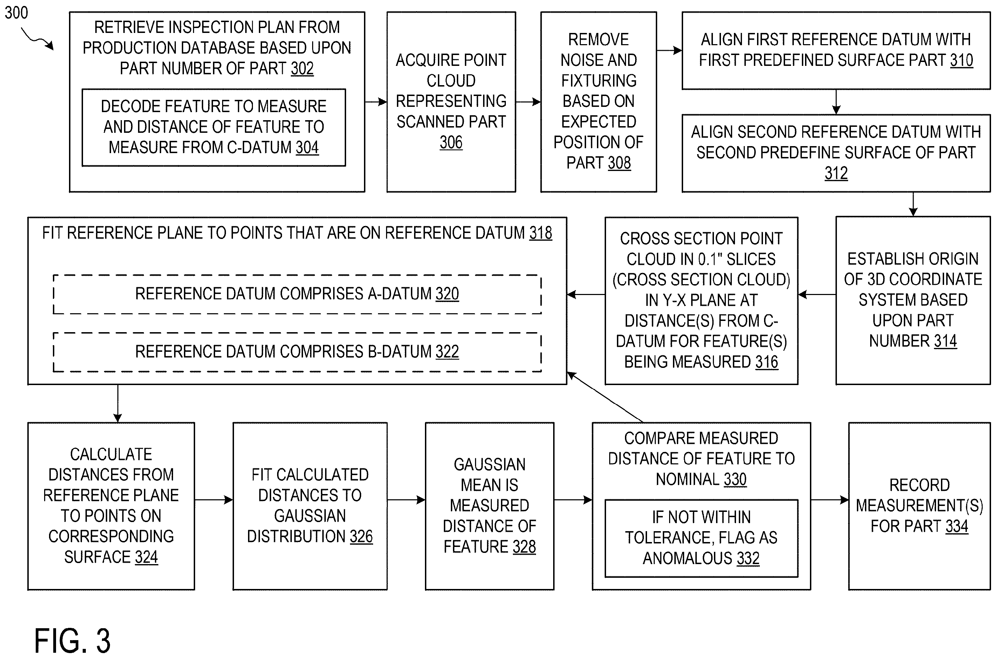

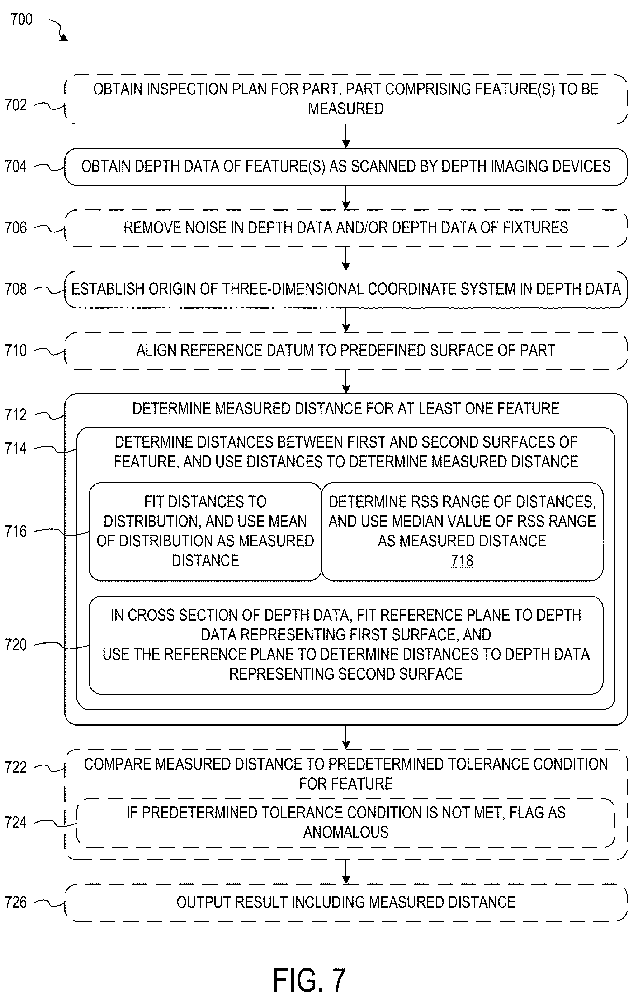

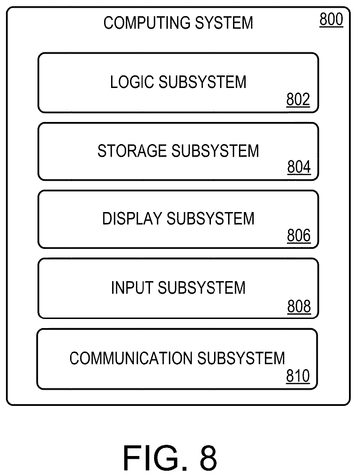

In the example of FIG. 2, the controller 216 is configured to determine one or more measurements for the part. Briefly, the controller 216 defines an origin of a three-dimensional coordinate system in the aligned depth data 224. Further, one or more distances for at least one feature of the one or more features of the part is determined from the aligned depth data 224 based at least upon the origin of the three-dimensional coordinate system and optionally utilizing the inspection plan 218. In some examples, the controller 216 can also obtain and utilize temperature data to determine the one or more measured distances 226. In other examples, the inspection plan 218 can be omitted. In the current example, the controller 216 can output a result in the form of an inspection report 228 including the measured distance(s) 226 for the at least one feature. The inspection report 228 can further include other suitable information, such as, a portion of the inspection plan 218, for example. The inspection report 228 can be saved in the system of record 220 (as depicted) or in another suitable location. In other examples, a result can have another configuration. Further aspects of determining the one or more measured distances 226 are discussed with reference to FIGS. 3 and 7. In other examples, the controller 216 can be configured to output the aligned depth data 224. In such examples, a suitable computing system connected to the measurement system 200 can determine the measured distance(s) from the aligned depth data 224 in a similar manner as discussed herein above with reference to the controller 216. An example computing system is discussed with reference to FIG. 8.

The measurement system 200 enables depth data for scanned parts to be obtained and suitable measurements extracted therefrom much more quickly as compared to manual inspection techniques known and used as of the filing date of this patent application. For example, a 100 foot long part can be scanned and measured within five minutes. Further, the measured distance(s) 226 can be determined in a manner that is at least comparable to an accuracy tolerance of manual inspection and/or other inspection tools, such as automated calipers or laser measurement devices, but with less human factor. In other examples, the measurement system 200 can have other components not depicted.

FIG. 3 illustrates a flowchart of an example method 300 for determining a measured distance of a feature on a part. The method 300 can be performed on the controller 216, a suitable computing system connected to the measurement system 200, or suitable combinations thereof in various examples. Here, the part includes one or more features to be measured, for example, as part of an inspection process. Examples of features to be measured include 1) height of a part, 2) width and/or thickness of a flange, 3) depth and/or position of a groove, and 4) width, height, thickness, length, and/or position of a part or a portion thereof. In other examples, other suitable distances on a feature can be measured.

The method 300 comprises, at 302, retrieving an inspection plan based upon a part number of the part from one or more of any suitable locations, such as a production database or an inspection plan repository, for example. The inspection plan includes dimensional information for the one or more features to be measured. The dimensional information can include a location along the part to measure a selected feature, tolerances for a measured distance of the feature, and/or other suitable information. In some examples, the location along the part can be defined relative to a C-datum, as will be discussed. In some such examples, retrieving the inspection plan includes decoding the inspection plan for a selected feature to be measured and a corresponding distance from the C-datum, as indicated at 304. In other such examples, the inspection plan can be used in another suitable manner.

At 306, the method 300 comprises acquiring depth data in the form of a point cloud representing the scanned part. For example, the point cloud can be obtained from the measurement system 200. In other examples, other suitable depth data can be used. Here, the method 300 further comprises, at 308, removing noise and depth data representing fixtures that held or supported the part during the scan (e.g., the mounts 106). In some such examples, the depth data representing the fixtures can be removed from the point cloud utilizing an expected position of the part during imaging, as discussed with reference to FIG. 1. Such a configuration helps to remove non-relevant information from the depth data.

The method 300 further comprises aligning, at 310, a first reference datum with a first predetermined surface of the part, and aligning, at 312, a second reference datum with a second predefined surface of the part. In some examples, the first reference datum is in the form of a plane corresponding to the YZ axis of a three-dimension coordinate system of the part in the depth data. Likewise, the second reference datum can be in the form of a plane corresponding to the XZ axis. As examples, the predetermine surfaces can include a surface of a flange, a surface of a web, or another suitable surface of the part.

At 314, the method 300 comprises establishing an origin of the three-dimension coordinate system of the part in the depth data. The origin can be established based upon a part number of the part. For example, the origin can be established utilizing two or three planes aligned to predetermined surfaces of a selected part. Additionally, a C-datum in the depth data is defined relative to the origin, in some examples. This can help to relate the locations of depth images with positions in the depth data.

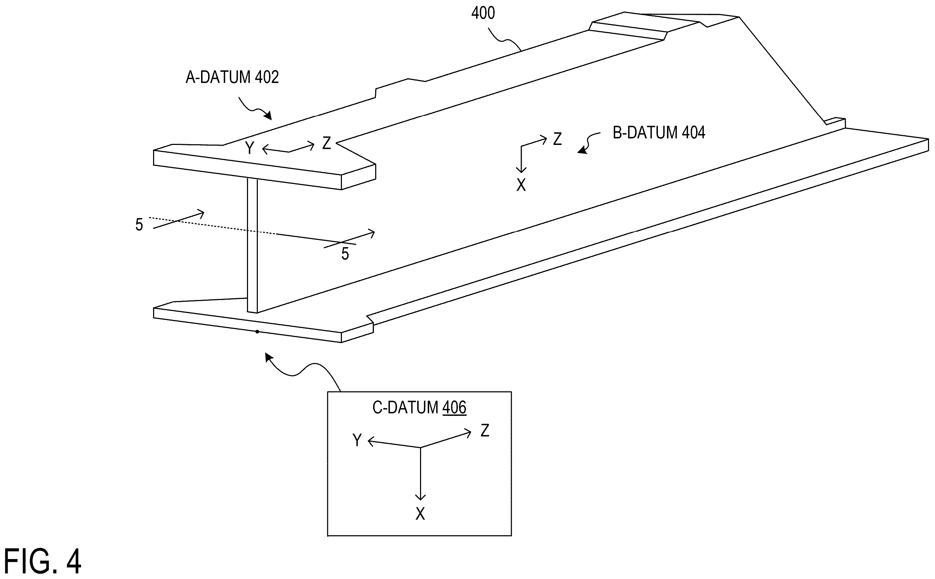

A specific example of a three-dimensional coordinate system of a part in the form of a stringer 400 in depth data is schematically depicted in FIG. 4. As depicted, an A-datum 402, in the form of a plane in the YZ axis, is aligned with a first side of the stringer 400. Likewise, a B-datum 404, in the form of a plane in the XZ axis, is aligned with a surface of a web of the stringer 400. Additionally, a C-datum 406 is defined as the origin of the three-dimensional coordinate system of the stringer 400. Specifically, a distance from the C-datum 406 is along an intersection of the B-datum 404 and a plane representing a second edge of the stringer 400. Thus, the origin of the three-dimensional coordinate system of the stringer 400 is established along with three reference datums. In other examples, a three-dimensional coordinate system for a part can be established in another suitable manner. FIG. 4 is illustrative. While discussed herein with reference to a stringer, depth data of another suitable part can be used in other examples.

Returning to FIG. 3, the method 300 comprises forming cross sections of the depth data at distance(s) from the C-datum listed in the inspection plan for the one or more features to be measured. Specifically, the point cloud is sectioned into 0.1 inch slices in the YX plane, as indicated at 316. For a selected feature and a corresponding cross section of the point cloud, a reference datum is specified based upon a measurement of the feature. This helps to isolate relevant depth data at an area of interest for measuring the feature. Here, the method 300 comprises fitting a reference plane to points in the cross section of the point cloud that are on the reference datum, as indicated at 318. In some examples, the reference plane can be evaluated against predetermined statistical criteria. As discussed with 310 and 312, reference datums can be aligned with predefined surfaces of the part. As such, a first surface of the feature to be measured includes the predefined surface of the part and thus is aligned with the corresponding reference datum. In various examples, the reference datum can include an A-datum, at 320, or a B-datum, at 322, depending on the feature being measured. In other examples, another suitable reference datum can be used. Additionally, the method 300 comprises calculating distances from the reference plane to points on a corresponding surface, for example a second surface of the feature to be measured, as indicated at 324. In other examples, points in a point cloud can be fit to another suitable shape. For example, a cylinder can be fit to a groove. In such examples, distances can be calculated from an intersection of the cylinder and a plane.

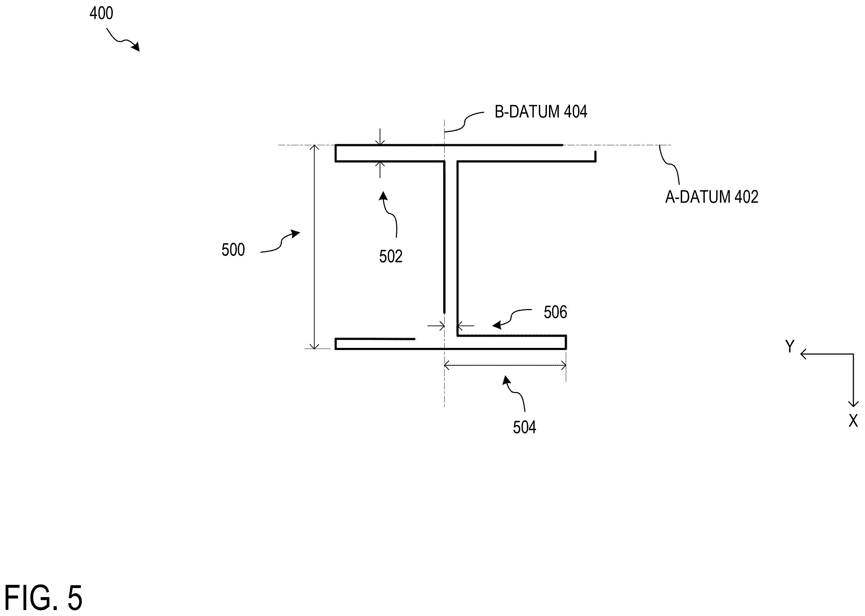

With reference to the example of the stringer 400, FIG. 5 schematically depicts an example cross section of the depth data of FIG. 4 at 5-5. As can be seen, the A-datum 402 is aligned with a first surface of the stringer 400. Here, a height measurement 500 reflects a measurement from the A-datum 402 to a corresponding side (e.g., the second surface of the stringer 400). Additionally, a first thickness measurement 502 reflects a measurement from an opposite side of a first flange to the A-datum 402. Likewise, the B-datum 404 is aligned with a surface of a web of the stringer 400. A width 504 of a second flange and a second thickness 506 of the web can be measured with reference to the B-datum 404.

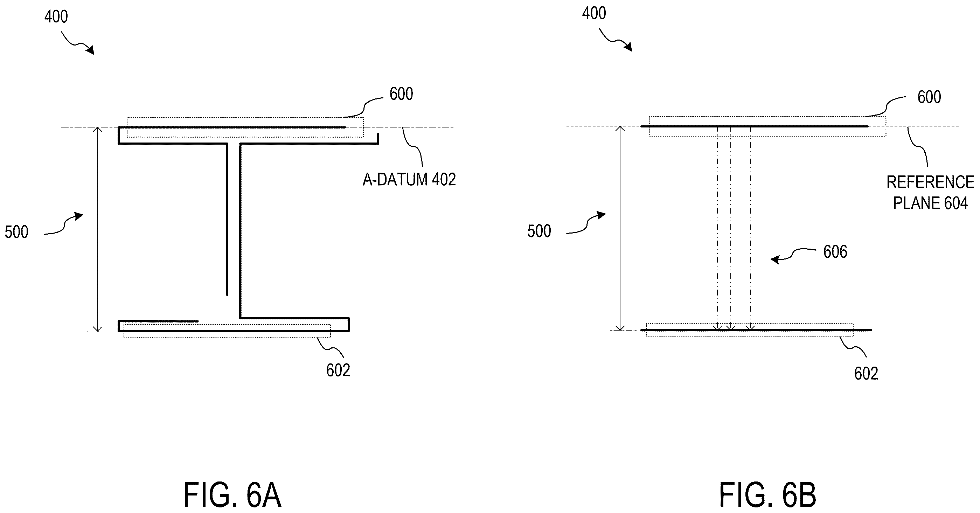

Further, the height measurement 500 is schematically depicted in more detail in FIGS. 6A and 6B. As discussed herein above, the method 300 fits a reference plane to points on the reference datum. In FIG. 6A, points on the A-datum 402 are isolated, as indicated by 600. These points 600 represent a first surface of the feature to be measured. Likewise, points on a second surface are also isolated, as indicated by 602. In FIG. 6B, a reference plane 604 is fit to the points 600 on the reference datum (e.g., the A-datum 402). Additionally, a plurality of distances 606 is measured from the reference plane 604 to the points 602 on the second surface. FIGS. 5, 6A, and 6B are illustrative. In other examples, a plurality of distances between surfaces of a feature can be determined in another suitable manner.

Returning to FIG. 3, the method 300 comprises, at 326, fitting the calculated distances (from 324) to a Gaussian distribution. Further, a Gaussian mean of the distribution is used as the measured distance of the feature, as indicated at 328. In other examples, a root sum squared (RSS) range of the calculated distances can be determined. In such examples, a median value of the RSS range can be used as the measured distance of the feature. In some such examples, min, max, and/or standard deviation of the RSS range can also be determined and reported. In further examples, another suitable distribution, range, and/or statistical parameter can be used.

The method 300 further comprises, at 330, comparing the measured distance of the feature to a predetermined nominal condition, such as a tolerance range, for example. In some examples, comparing the measured distance comprises, if the measured distance is not within the tolerance range, flagging the measured distance as anomalous, as indicated at 332. In some examples, the method 300 can return to 318 for one or more additional features to be measured. In other examples, 330 and/or 332 can be omitted.

Continuing, the method 300 comprises recording the measured distance as a measurement for the part in the system of record, or another suitable location, as indicated at 334. In some examples, additional suitable information can also be recorded. While discussed here with reference to point clouds, other suitable depth data can be used in other examples. FIG. 3 is illustrative.

FIG. 7 illustrates a flowchart of another example method 700 for determining measured distances of features on a part. For example, the measurement system 100 or the measurement system 200 can perform the method 700. Additionally, a computing system connected to the measurement system 200 can also perform the method 700.

The method 700 optionally comprises, at 702, obtaining an inspection plan for the part. For example, the inspection plan 218 can be used. Further, the part comprises one or more features to be measured. The method 700 also comprises, at 704, obtaining depth data of the one or more features of the part as scanned by a plurality of depth imaging devices. For example, the aligned depth data 224 from the measurement system 200 can be used. In some examples, the method 700 can optionally comprise, at 706, 1) removing noise in the depth data and/or 2) removing depth data of fixtures that held the part during the scan (e.g., the mounts 106).

Additionally, the method 700 comprises, at 708, establishing an origin of a three-dimensional coordinate system in the depth data. For example, the origin can be established as discussed with reference to FIG. 4. In some examples, the method 700 optionally comprises aligning a reference datum to a predefined surface of the part, as indicated at 710. In some such examples, the predefined surface can include a first surface of a feature to be measured, or another suitable surface.

At 712, the method 700 comprises determining a measured distance for at least one feature of the one or more features from the depth data. Further, the measured distance is based at least upon the inspection plan and the origin of the three-dimensional coordinate system. In some examples, determining the measured distance for the at least one feature comprises determining a plurality of distances from a first surface of the at least one feature to a second surface, and using the plurality of distances to determine the measured distance, as indicated at 714. For example, the plurality of distances 606 of FIG. 6B can be used. In some such examples, using the plurality of distances to determine the measured distance comprises fitting the plurality of distances to a distribution, and using a mean of the distribution as the measured distance, as indicated at 716. Alternatively or additionally, using the plurality of distances to determine the measured distance comprises determining a root sum squared (RSS) range of the plurality of distances, and using a median value of the RSS range as the measured distance, as indicated at 718. In other examples, the measured distance of the feature can be determined in another suitable manner using the plurality of distances.

Additionally, determining the plurality of distances from the first surface to the second surface comprises, at 720, in a cross section of the depth data at an area of interest for the at least one feature, fitting a reference plane to the depth data representing the first surface, in some examples. In such examples, determining the plurality of distances further comprises using the reference plan to determine the plurality of distances to depth data representing the second surface in the cross section, also indicated at 720. In other examples, one or more of 712, 714, 716, 718, or 720 can be repeated for one or more additional feature from the one or more features of the part.

The method 700 can optionally comprise comparing the measured distance to a predetermined tolerance condition for the at least one feature, as indicated at 722. In some such examples, comparing the measured distance to the predetermined tolerance condition comprises, if the measured distance does not meet the predetermined tolerance condition, flagging the measured distance as anomalous, as indicated at 724. Continuing, the method 700 optionally comprises, at 726, outputting result including the measured distance for the at least one feature. In examples where more than one measured distance was determined, the result can include the additional measured distances.

The method 700 helps to enable measuring parts in a significantly reduced time as compared to manual inspections and thus helps to increase flow time. Additionally, performing the method 700 on the measurement system 200 and/or a computing system connected to the measurement system 200, can help to reduce ergonomic strain and/or environmental/health/safety (EHS) related injuries for operators/inspectors. Further, the method 700 can encode human knowledge into a repeatable system. Specifically, the method 700 helps to increase repeatability and reliability of measurements compared to manual inspections.

In some embodiments, the examples described herein can be tied to a computing system of one or more computing devices. In particular, aspects of such methods and processes can be implemented as a computer-application program or service, an API, a library, and/or other computer-program product.

FIG. 8 schematically shows a non-limiting embodiment of a computing system 800 that can enact one or more of the examples described above. For example, computing system 800 can be used to execute instructions to perform the method 300 of FIG. 3, the method 700 of FIG. 7, and/or potentially perform other functions.

Computing system 800 is shown in simplified form. Computing system 800 can take the form of one or more personal computers, server computers, tablet computers, network computing devices, mobile computing devices, mobile communication devices (e.g., smart phones), and/or other computing devices. In some examples, the controller 216 of FIG. 2 comprises one or more aspects of the computing system 800. In other examples, the computing system 800 can be configured to connect to the measurement system 200.

Computing system 800 includes a logic subsystem 802, a storage subsystem 804, and an optional display subsystem 806. Computing system 800 can optionally include an input subsystem 808, a communication subsystem 810, and/or other computing-related components not shown in FIG. 8.

Logic subsystem 802 includes one or more physical devices configured to execute instructions. For example, logic subsystem 802 can be configured to execute instructions that are part of one or more applications, services, programs, routines, libraries, objects, components, data structures, or other logical constructs. Such instructions can be implemented to perform a task, implement a data type, transform the state of one or more components, achieve a technical effect, or otherwise arrive at a desired result. For example, logic subsystem 802 can be used to execute instructions to perform the method 300 of FIG. 3 and/or the method 700 of FIG. 7.

Logic subsystem 802 can include one or more processors configured to execute software instructions. Additionally or alternatively, logic subsystem 802 can include one or more hardware or firmware logic machines configured to execute hardware or firmware instructions. Processors of logic subsystem 802 can be single-core or multi-core, and the instructions executed thereon can be configured for sequential, parallel, and/or distributed processing. Individual components of logic subsystem 802 optionally can be distributed among two or more separate devices, which can be remotely located and/or configured for coordinated processing. Aspects of logic subsystem 802 can be virtualized and executed by remotely accessible, networked computing devices configured in a cloud-computing configuration.

Storage subsystem 804 includes one or more physical devices configured to hold instructions executable by logic subsystem 802 to implement the methods and processes described herein. For example, storage subsystem 804 can hold instructions executable to perform the method 300 of FIG. 3, the method 700 of FIG. 7, and/or potentially perform other functions. When such methods and processes are implemented, the state of storage subsystem 804 can be transformed-e.g., to hold different data.

Storage subsystem 804 can include removable and/or built-in devices. Storage subsystem 804 can include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage subsystem 804 can include volatile, nonvolatile, dynamic, static, read/write, read-only, random-access, sequential-access, location-addressable, file-addressable, and/or content-addressable devices.

It will be appreciated by those of ordinary skill in the art, without undue experimentation, that storage subsystem 804 includes one or more physical devices. However, aspects of the instructions described herein alternatively may be propagated by a communication medium (e.g., an electromagnetic signal, an optical signal, etc.) that is not held by a physical device for a finite duration.

Aspects of logic subsystem 802 and storage subsystem 804 can be integrated together into one or more hardware-logic components. Such hardware-logic components can include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

When included, a display subsystem 806 can be used to present a visual representation of data held by storage subsystem 804. This visual representation can take the form of a graphic user interface (GUI). As the herein described methods and processes change the data held by the storage subsystem 804, and thus transform the state of the storage machine, the state of display subsystem 806 can likewise be transformed to visually represent changes in the underlying data.

When included, a display subsystem 806 can include one or more display devices utilizing virtually any type of technology. Such display devices can be combined with logic subsystem 802 and/or storage subsystem 804 in a shared enclosure, or such display devices can be peripheral display devices.

When included, input subsystem 808 can comprise or interface with one or more user-input devices such as a keyboard, mouse, touch screen, or joystick. In some embodiments, the input subsystem 808 can comprise or interface with selected natural user input (NUI) componentry. Such componentry can be integrated or peripheral, and the transduction and/or processing of input actions can be handled on- or off-board. Example NUI componentry can include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, and without respect to the dynamic and reconfigurable communication system described above, communication subsystem 810 can be configured to communicatively couple computing system 800 with one or more other computing devices. Communication subsystem 810 can include wired and/or wireless communication devices compatible with one or more different communication protocols. As non-limiting examples, the communication subsystem can be configured for communication via a wireless telephone network, or a wired or wireless local- or wide-area network. In some embodiments, communication subsystem 810 can allow computing system 800 to send and/or receive messages (e.g., the aligned depth data 224, the inspection plan 218, and/or the inspection report 228) to and/or from other devices via a network such as the Internet. For example, communication subsystem 810 can be used to receive or send data to another computing system. As another example, communication subsystem may be used to communicate with other computing systems, such as during execution of the method 300 and/or the method 700 in a distributed computing environment.

Further, the disclosure comprises configurations according to the following clauses.

Clause 1. A method for measuring a part, the method comprising obtaining depth data of one or more features on the part as scanned by a plurality of depth imaging devices, establishing an origin of a three-dimensional coordinate system in the depth data, and determining a measured distance for at least one feature of the one or more features from the depth data, and based at least upon an inspection plan and the origin of the three-dimensional coordinate system.

Clause 2. The method of clause 1, wherein determining the measured distance for the at least one feature comprises determining a plurality of distances from a first surface of the at least one feature to a second surface, and using the plurality of distances to determine the measured distance.

Clause 3. The method of clause 2, wherein using the plurality of distances to determine the measured distance comprises fitting the plurality of distances to a distribution, and using a mean of the distribution as the measured distance.

Clause 4. The method of any preceding clause, in particular clause 1, further comprising outputting a result including the measured distance for the at least one feature.

Clause 5. The method of any preceding clause, in particular clause 2, wherein determining the plurality of distances from the first surface to the second surface comprises, in a cross section of the depth data at an area of interest for the at least one feature, fitting a reference plane to the depth data representing the first surface, and using the reference plan to determine the plurality of distances to depth data representing the second surface.

Clause 6. The method of any preceding clause, in particular clause 1, further comprising aligning a reference datum to a predefined surface of the part in the depth data.

Clause 7. The method of any preceding clause, in particular clause 1, further comprising comparing the measured distance to a predetermined tolerance condition for the at least one feature, and if the measured distance does not meet the predetermined tolerance condition, flagging the measured distance as anomalous in the result.

Clause 8. The method of any preceding clause, in particular clause 1, further comprising one or more of removing noise in the depth data or removing depth data representing fixtures that held the part during the scan.

Clause 9. A measurement system for a part, the measurement system comprising a plurality of depth imaging devices arranged on a measurement head, and a controller configured to obtain raw depth data by scanning one or more features on the part using the plurality of depth imaging devices, aligning the raw depth data to form aligned depth data, establish an origin of a three-dimensional coordinate system in the aligned depth data, and determine a measured distance for at least one feature of the one or more features from the aligned depth data, and based at least upon the inspection plan and the origin of the three-dimensional coordinate system.

Clause 10. The measurement system of clause 9, wherein the controller is configured to determine the measured distance for the at least one feature by determining a plurality of distances from a first surface of the at least one feature to a second surface, and using the plurality of distances to determine the measured distance.

Clause 11. The measurement system of clause 10, wherein the controller is configured to use the plurality of distances to determine the measured distance by fitting the plurality of distances to a distribution, and using a mean of the distribution as the measured distance.

Clause 12. The measurement system of any preceding clause, in particular clause 9, wherein the controller further is configured to output a result including the measured distance of the at least one feature.

Clause 13. The measurement system of any preceding clause, in particular clause 10, wherein the controller is configured to determine the plurality of distances from the first surface to the second surface by, in a cross section of the depth data at an area of interest for the at least one feature, fitting a reference plane to the depth data representing the first surface, and using the reference plane to determine the plurality of distances to the depth data representing the second surface.

Clause 14. The measurement system of any preceding clause, in particular clause 9, the controller further is configured to compare the measured distance to a predetermined tolerance condition for the at least one feature, and if the measured distance does not meet the predetermined tolerance condition, flag the measured distance as anomalous in the result.

Clause 15. A computing system configured to communicate with a measurement system for a part, the computing system comprising a logic subsystem, and a storage subsystem comprising an inspection plan for the part, and instructions executable by the logic subsystem to obtain depth data of one or more features of the part as scanned by a plurality of depth imaging devices on the measurement system, establish an origin of a three-dimensional coordinate system in the depth data, and determine a measured distance for at least one feature of the one or more features from the depth data, and based at least upon the inspection plan and the origin of the three-dimensional coordinate system.

Clause 16. The computing system of clause 15, wherein the instructions executable to determine the measured distance for the at least one feature comprise instructions executable to determine a plurality of distances from a first surface of the at least one feature to a second surface, and using the plurality of distances to determine the measured distance.

Clause 17. The computing system of clause 16, wherein the instructions executable to use the plurality of distances to determine the measured distance comprise instructions executable to fit the plurality of distances to a distribution, and use a mean of the distribution as the measured distance.

Clause 18. The computing system of any preceding clause, in particular clause 15, wherein the instructions are further executable to output a result including the measured distance of the at least one feature.

Clause 19. The computing system of any preceding clause, in particular clause 15, wherein the instructions are further executable to align a reference datum to a predefined surface of the part in the depth data.

Clause 20. The computing system of any preceding clause, in particular clause 15, the instructions further are executable to compare the measured distance to a predetermined tolerance condition for the at least one feature, and if the measured distance does not meet the predetermined tolerance condition, flag the measured distance as anomalous in the result.

This disclosure is presented by way of example and with reference to the associated drawing figures. Components, process steps, and other elements that can be substantially the same in one or more of the figures are identified coordinately and are described with minimal repetition. It will be noted, however, that elements identified coordinately can also differ to some degree. It will be further noted that some figures can be schematic and not drawn to scale. The various drawing scales, aspect ratios, and numbers of components shown in the figures can be purposely distorted to make certain features or relationships easier to see.

"And/or" as used herein is defined as the inclusive or V, as specified by the following truth table:

| A | B | A V B |
|---|---|---|
| True | True | True |
| True | False | True |
| False | True | True |
| False | False | False |

The terminology "one or more of A or B" as used herein comprises A, B, or a combination of A and B. The terminology "one or more of A, B, or C" is equivalent to A, B, and/or C. As such, "one or more of A, B, or C" as used herein comprises A individually, B individually, C individually, a combination of A and B, a combination of A and C, a combination of B and C, or a combination of A, B and C.

It will be understood that the configurations and/or approaches described herein are exemplary in nature, and that these specific embodiments or examples are not to be considered in a limiting sense, because numerous variations are possible. The specific routines or methods described herein can represent one or more of any number of strategies. As such, various acts illustrated and/or described can be performed in the sequence illustrated and/or described, in other sequences, in parallel, or omitted. Likewise, the order of the above-described processes can be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method (700) for measuring a part (102), the method (700) comprising:
obtaining depth data of one or more features on the part as scanned by a plurality of depth imaging devices (704);
establishing an origin of a three-dimensional coordinate system in the depth data (708); and
determining a measured distance for at least one feature of the one or more features from the depth data, and based at least upon an inspection plan and the origin of the three-dimensional coordinate system (712).

2. The method (700) of claim 1, wherein determining the measured distance for the at least one feature comprises determining a plurality of distances from a first surface of the at least one feature to a second surface, and using the plurality of distances to determine the measured distance (714).

3. The method (700) of claim 2, wherein using the plurality of distances to determine the measured distance comprises fitting the plurality of distances to a distribution, and using a mean of the distribution as the measured distance (716).

4. The method (700) of any preceeding claim, further comprising outputting a result including the measured distance for the at least one feature (726).

5. The method (700) of claim 2, wherein determining the plurality of distances from the first surface to the second surface comprises, in a cross section of the depth data at an area of interest for the at least one feature, fitting a reference plane to the depth data representing the first surface, and using the reference plan to determine the plurality of distances to depth data representing the second surface (720).

6. The method (700) of any preceeding claim, further comprising aligning a reference datum to a predefined surface of the part in the depth data (710).

7. The method (700) of any preceeding claim, further comprising comparing the measured distance to a predetermined tolerance condition for the at least one feature (722), and if the measured distance does not meet the predetermined tolerance condition, flagging the measured distance as anomalous in the result (724).

8. The method (700) of any preceeding claim, further comprising one or more of removing noise in the depth data or removing depth data representing fixtures that held the part during the scan (706).

9. A measurement system (100) for a part (102), the measurement system (100) comprising:
a plurality of depth imaging devices (110, 204) arranged on a measurement head (112, 206); and
a controller (216) configured to
obtain raw depth data by scanning one or more features on the part using the plurality of depth imaging devices,
aligning the raw depth data to form aligned depth data,
establish an origin of a three-dimensional coordinate system in the aligned depth data (708), and
determine a measured distance for at least one feature of the one or more features from the aligned depth data, and based at least upon the inspection plan and the origin of the three-dimensional coordinate system (712).

10. The measurement system (100) of claim 9, wherein the controller (216) is configured to determine the measured distance for the at least one feature by determining a plurality of distances from a first surface of the at least one feature to a second surface, and using the plurality of distances to determine the measured distance (714).

11. The measurement system (100) of claim 10, wherein the controller (216) is configured to use the plurality of distances to determine the measured distance by fitting the plurality of distances to a distribution, and using a mean of the distribution as the measured distance (716).

12. The measurement system (100) of any of claims 9 to 11, wherein the controller (216) further is configured to output a result including the measured distance of the at least one feature (726).

13. The measurement system (100) of claim 10, wherein the controller (216) is configured to determine the plurality of distances from the first surface to the second surface by, in a cross section of the depth data at an area of interest for the at least one feature, fitting a reference plane to the depth data representing the first surface, and using the reference plane to determine the plurality of distances to the depth data representing the second surface (720).

14. The measurement system (100) of any of claims 9 to 13, the controller (216) further is configured to compare the measured distance to a predetermined tolerance condition for the at least one feature (722), and if the measured distance does not meet the predetermined tolerance condition, flag the measured distance as anomalous in the result (724).

15. A computing system (800, 216) configured to communicate with a measurement system (100) comprising a plurality of depth imaging devices (704) for a part (102), the computing system (800, 216) comprising:
a logic subsystem (802); and
a storage subsystem (804) comprising an inspection plan (218) for the part (102), and instructions executable by the logic subsystem (802) to perform a method of any of claims 1 to 8.
